# EUROPEAN PATENT APPLICATION

(11) **EP 4 131 856 A1**
(43) Date of publication of application: **08.02.2023**
(21) Application number: 21796281.0
(22) Date of filing: 07.04.2021
(51) Int. Cl.: H04L 12/26, H04L 12/24

(54) **NETWORK PERFORMANCE MONITORING METHOD, NETWORK DEVICE, AND STORAGE MEDIUM**

(30) Priority: 29.04.2020 CN 202010359259
(71) Applicant: Huawei Technologies Co., Ltd., Shenzhen, Guangdong 518129, (CN)
(72) Inventor: LI, Fayuan, Shenzhen, Guangdong 518129 (CN); HU, Yongjian, Shenzhen, Guangdong 518129 (CN)
(74) Representative: Maiwald GmbH
(86) International application number: PCT/CN2021/085816
(87) International publication number: WO 2021/218582

(57) **Abstract**

This application provides a network performance monitoring method, a network device, and a storage medium, and belongs to the field of network technologies. In this application, a forwarding plane samples network performance data based on a fine-grained time periodicity, and records a quantity of network performance exceptions; and a control plane generates, based on a coarse-grained time periodicity, an alarm when the quantity of network performance exceptions recorded by the forwarding plane is greater than a threshold. On a basis of meeting a fine-grained requirement on network performance monitoring, because the control plane does not need to report all the collected network performance data, a volume of data that needs to be reported by the control plane is greatly reduced. This resolves a problem of overload of a main control CPU that is caused by massive data reporting, and reduces dependency of the network performance monitoring on performance of the main control CPU of a device. This further resolves a problem that a large quantity of bandwidth resources are occupied due to the massive data reporting, reduces dependency of the network performance monitoring on the bandwidth resources, and helps meet a requirement for deploying a large quantity of performance monitoring nodes in a live network.

## Description

This application claims priority to Chinese Patent Application No. 202010359259.0, filed on April 29, 2020 and entitled "NETWORK PERFORMANCE MONITORING METHOD, NETWORK DEVICE, AND STORAGE MEDIUM ", which is incorporated herein by reference in its entirety.

### TECHNICAL FIELD

This application relates to the field of network technologies, and in particular, to a network performance monitoring method, a network device, and a storage medium.

### BACKGROUND

As users have higher requirements on network performance, the network performance needs to be monitored so that carriers can adjust a network in time when the network performance deteriorates.

Currently, a network device serves as a network performance monitoring node. During data flow forwarding, the network device periodically collects local network performance data based on a preset collection periodicity. After the network device collects the network performance data each time, a main control central processing unit (Central Processing Unit, CPU) of the network device reports the collected network performance data to an operation support system (Operation Support System, OSS), so that the OSS performs data analysis and presentation.

When the foregoing method is used, because a data volume of the reported network performance data is large, a requirement on the main control CPU of the network device is very high. This easily causes overload of the main control CPU of the network device.

### SUMMARY

Embodiments of this application provide a network performance monitoring method, a network device, and a storage medium, to reduce dependency on performance of a main control CPU during a network performance monitoring process. The technical solution is as follows:

According to a first aspect, a network performance monitoring method is provided. In the method, a forwarding plane samples network performance data based on a first time periodicity, and records a quantity of network performance exceptions, where when network performance data obtained through each sampling meets a preset condition, one network performance exception is recorded, and the first time periodicity is a sampling periodicity in which the forwarding plane collects the network performance data; a control plane determines that a quantity of network performance exceptions in a second time periodicity is greater than a first threshold, where duration of the second time periodicity is greater than duration of the first time periodicity; and the control plane generates an alarm.

According to the method, the forwarding plane samples the network performance data based on a fine-grained time periodicity, and records the quantity of network performance exceptions; and the control plane generates, based on a coarse-grained time periodicity, the alarm when the quantity of network performance exceptions recorded by the forwarding plane is greater than a threshold. On a basis of meeting a fine-grained requirement on network performance monitoring, because the control plane does not need to report all the collected network performance data, a volume of data that needs to be reported by the control plane is greatly reduced. This resolves a problem of overload of a main control CPU that is caused by massive data reporting, and reduces dependency of the network performance monitoring on performance of the main control CPU of a device. This further resolves a problem that a large quantity of bandwidth resources are occupied due to the massive data reporting, reduces dependency of the network performance monitoring on the bandwidth resources, and helps meet a requirement for deploying a large quantity of performance monitoring nodes in a live network.

Optionally, the first time periodicity is in milliseconds, and the second time periodicity is at least in seconds.

According to this optional manner, the forwarding plane samples the network performance data and records the quantity of network performance exceptions based on a millisecond-level periodicity. This helps implement millisecond-level performance monitoring, to meet a customer requirement on the millisecond-level performance monitoring. In addition, because the control plane determines generation of the alarm based on a periodicity that is at least in seconds, dependency of the millisecond-level performance monitoring on the bandwidth resources and dependency of the millisecond-level performance monitoring on the performance of the main control CPU can be reduced.

Optionally, the preset condition includes: a value of the network performance data obtained through each sampling is greater than or equal to a second threshold.

According to this optional manner, the forwarding plane may determine, by comparing a value of network performance with a threshold, whether to record one network performance exception. Implementation is simple, and therefore practicability is high.

Optionally, that a forwarding plane records a quantity of network performance exceptions includes: recording a quantity of network performance exceptions corresponding to each exception level in a plurality of exception levels, where the plurality of exception levels respectively correspond to a plurality of preset conditions, and when the network performance data obtained through each sampling meets a preset condition corresponding to an exception level, one network performance exception corresponding to the exception level is recorded.

According to this optional manner, the forwarding plane separately records the quantity of network performance exceptions of each exception level, to monitor network performance of the plurality of exception levels. This enables a network performance monitoring function to be more refined, and improves flexibility. In particular, when the alarm carries the exception level, it is helpful to determine which exception level of network performance exception currently occurs, to help a user learn of a severity of the current network performance exception.

Optionally, that a control plane determines that a quantity of network performance exceptions in a second time periodicity is greater than a first threshold includes: the control plane determines that all quantities of network performance exceptions corresponding to the plurality of exception levels in the second time periodicity are greater than the first threshold; and that the control plane generates an alarm includes: the control plane generates alarm information indicating a highest exception level in the plurality of exception levels.

According to this optional manner, when all the plurality of exception levels meet an alarm trigger condition, the control plane needs to generate only the alarm information of the highest exception level, and suppress alarm information of a lower exception level. This reduces a quantity of alarm information that needs to be generated, and avoids interference to the user that is caused by excessive generated alarm information.

Optionally, the preset condition corresponding to the exception level includes: the value of the network performance data obtained through each sampling is greater than or equal to a third threshold corresponding to the exception level, and a higher exception level indicates a higher third threshold corresponding to the exception level.

According to this optional manner, different thresholds are separately set for values of the network performance data based on exception levels, so that the forwarding plane separately records, for the network performance data with different values, quantities corresponding to different exception levels. This enables the network performance monitoring function to be more refined, and improves the flexibility.

Optionally, the network performance data includes at least one of the following: a delay, packet loss, jitter, bandwidth, a transmission rate, a bit error, and an error packet.

According to this optional manner, it is helpful to determine which dimension of network performance is abnormal, and multi-dimensional network performance monitoring can be supported, so that the network performance monitoring is more comprehensive, to meet more application scenarios.

Optionally, the method further includes: the forwarding plane determines a network performance parameter in the second time periodicity based on the network performance data obtained through each sampling; and the control plane obtains the network performance parameter.

According to this optional manner, a requirement for collecting statistics on the network performance parameter is met, and because a task for collecting statistics on the network performance parameter is offloaded to the forwarding plane, processing overheads of the control plane that are caused by collecting statistics on the network performance parameter are reduced.

Optionally, the network performance parameter includes at least one of the following: a maximum delay, a minimum delay, an average delay, a packet loss rate, jitter, bandwidth, a transmission rate, a bit error rate, and a packet error rate.

According to this optional manner, a requirement for collecting statistics on multi-dimensional network performance parameters can be met, so that the network performance monitoring is more comprehensive, to meet more application scenarios.

Optionally, after that the control plane generates an alarm, the method further includes: the control plane sends the alarm to a control management device.

According to this optional manner, because the control plane reports the alarm to the control management device, the control plane can notify a carrier in time that a performance exception event occurs in a network. This helps the carrier adjust a network status in time, and helps resolve a problem of the network performance exception in time, to avoid affecting user experience.

Optionally, after that the control plane sends the alarm to a control management device, the method further includes: the control plane cancels the alarm if all quantities of network performance exceptions in a plurality of consecutive second time periodicities after the second time periodicity is less than the first threshold.

According to this optional manner, after reporting the alarm, the control plane cancels the alarm based on the quantities of network performance exceptions in the plurality of consecutive periodicities, so that a long-term residue of the generated alarm can be avoided. In addition, by canceling the alarm, the control plane can notify the carrier that the network performance is normal and a fault that causes the network performance exception has been rectified.

According to a second aspect, a network performance monitoring method is provided. In the method, a control plane obtains a quantity of network performance exceptions from a forwarding plane, where when network performance data obtained through each sampling meets a preset condition, one network performance exception is recorded, and a first time periodicity is a sampling periodicity in which the forwarding plane collects the network performance data; the control plane determines that a quantity of network performance exceptions in a second time periodicity is greater than a first threshold, where duration of the second time periodicity is greater than duration of the first time periodicity; and the control plane generates an alarm.

According to a third aspect, a network device is provided. The network device includes a main control board and an interface board. The main control board includes a module configured to perform the method corresponding to the control plane in any one of the first aspect or the optional manners of the first aspect. The interface board includes a module configured to perform the method corresponding to the forwarding plane in any one of the first aspect or the optional manners of the first aspect.

According to a fourth aspect, a network device is provided. The network device includes a main control board and an interface board. The main control board includes a first processor and a first memory. The interface board includes a second processor, a second memory, and an interface card. The main control board is coupled to the interface board.

The first memory may be configured to store program code. The first processor is configured to invoke the program code in the first memory to perform the following operations: sampling network performance data based on a first time periodicity, and recording a quantity of network performance exceptions, where when network performance data obtained through each sampling meets a preset condition, one network performance exception is recorded, and the first time periodicity is a sampling periodicity in which a forwarding plane collects the network performance data.

The second memory may be configured to store program code. The second processor is configured to invoke the program code in the second memory to trigger the interface card to perform the following operations: determining that a quantity of network performance exceptions in a second time periodicity is greater than a first threshold, where duration of the second time periodicity is greater than duration of the first time periodicity; and generating an alarm.

In a possible implementation, an inter-process communication (inter-process communication, IPC) channel is established between the main control board and the interface board, and the main control board and the interface board communicate with each other on the IPC channel.

According to a fifth aspect, a computer-readable storage medium is provided. The storage medium stores at least one instruction, and the instruction is read by a processor, so that a forwarding plane and a control plane perform the network performance monitoring method provided in any one of the first aspect or the optional manners of the first aspect.

According to a sixth aspect, a computer program product is provided. When the computer program product runs on a network device, a forwarding plane and a control plane of the network device are enabled to perform the network performance monitoring method provided in any one of the first aspect or the optional manners of the first aspect.

According to a seventh aspect, a chip is provided. When the chip is run on a network device, a forwarding plane and a control plane of the network device are enabled to perform the network performance monitoring method provided in any one of the first aspect or the optional manners of the first aspect.

### BRIEF DESCRIPTION OF DRAWINGS

FIG. 1 is a schematic diagram of a system architecture 100 according to an embodiment of this application;
FIG. 2 is a flowchart of a network performance monitoring method 200 according to an embodiment of this application;
FIG. 3 is a schematic diagram of a structure of a network device 300 according to an embodiment of this application; and
FIG. 4 is a schematic diagram of a structure of a network device 400 according to an embodiment of this application.

### DESCRIPTION OF EMBODIMENTS

To make objectives, technical solutions, and advantages of this application clearer, the following further describes implementations of this application in detail with reference to the accompanying drawings.

The following describes an example of an application scenario of this application.

A network performance monitoring method provided in embodiments of this application may be applied to a millisecond-level network performance monitoring scenario. The following separately describes the millisecond-level network performance monitoring scenario briefly.

With the improvement of living standards of people, users have higher requirements on network experience. This requires carriers to monitor network performance in real time. The carriers may adjust a network in time based on the network performance to avoid user complaints due to network performance deterioration caused by network performance exceptions such as unbalanced network traffic and network congestion. However, currently, in an actual network, network performance monitoring is performed in a second or minute level. Because a second-level or minute-level statistical periodicity is excessively long, when long-term network performance statistical results are stable, but occasionally burst traffic causes traffic to exceed assured bandwidth or link bandwidth frequently of a service occurs. As a result, a small quantity of packets are lost. To better reflect a real-time traffic status of the network, a more accurate millisecond-level network performance monitoring function is required.

A current millisecond-level performance monitoring method inherits a second-level performance monitoring method. Each performance monitoring node (for example, a forwarding plane of a device) collects network performance data based on a millisecond-level sampling periodicity, and reports millisecond-level network performance data sampled each time to main control of the device in real time, or packs and reports, based on a specific periodicity, millisecond-level network performance data sampled each time to main control of the device. The main control of the device reports all the sampled network performance data to an OSS on a data communication network (Data Communication Network, DCN) channel or out-of-band DCN channel between devices and through telemetry (Telemetry) or a simple network management protocol (Simple Network Management Protocol, SNMP). Then, the OSS analyzes and presents the network performance data.

However, when the foregoing manner is used, because data sampling and reporting are performed in a millisecond level, a data volume of network performance data is huge. Therefore, a requirement on a main control CPU is very high. This easily causes overload of the CPU. In addition, because the data volume of the collected network performance data is huge, data reporting needs to occupy a large quantity of DCN bandwidth resources. As a result, it is almost impossible to deploy nodes and instances in a live network.

In view of this, embodiments of this application provide a network performance monitoring method. When a sampling periodicity is set to a millisecond level, dependency of millisecond-level network performance monitoring on performance of the main control CPU of the device can be reduced, and a customer requirement on the millisecond-level network performance monitoring can be met. In addition, dependency of the millisecond-level network performance monitoring on the DCN bandwidth resources can be reduced, to meet a requirement for deploying a large quantity of millisecond-level performance monitoring nodes in the live network.

The following describes technical solutions provided in embodiments of this application from a plurality of perspectives such as a system architecture, a method, a virtual apparatus, an entity apparatus, and a medium.

The following describes the system architecture provided in embodiments of this application.

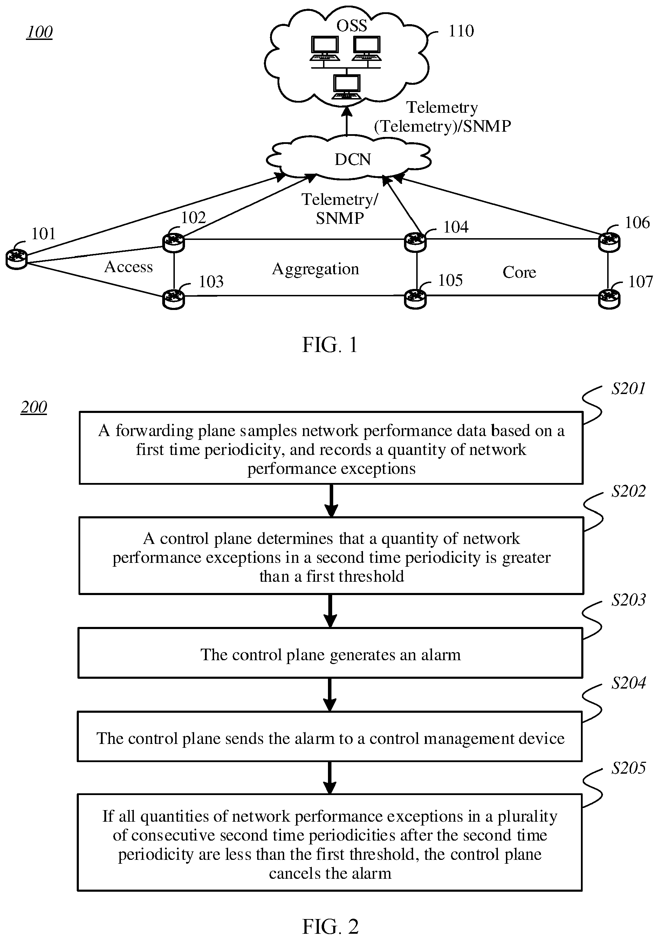

Refer to FIG. 1. An embodiment of this application provides a system architecture 100. The system architecture 100 is an example of a network performance monitoring system. The system architecture 100 includes at least one network device and a control management device. Each of the at least one network device is connected to the control management device through a network (for example, a DCN).

The network device in the system architecture 100 includes, but is not limited to, an access network device, an aggregation network device, or a core network device. A type of the network device includes a plurality of cases. For example, the network device includes, but is not limited to, a packet transport network (Packet Transport Network, PTN) device, an agile transport network (Agile Transport Network, ATN), an optical switching network (Optical Switching Network, OSN), a router, or a switch; or the network device is another type of device that supports performance monitoring, for example, a device that supports millisecond-level performance monitoring. The type of the network device is not limited in this embodiment. For example, refer to FIG. 1. The network device is an access network device 101, an aggregation network device 102, an aggregation network device 103, a backbone aggregation network device 104, a backbone aggregation network device 105, a core network device 106, or a core network device 107. All or some network devices in the system architecture 100 serve as performance monitoring nodes, and are configured to perform a method 200. Optionally, which network devices in the system architecture 100 serve as performance monitoring nodes is specified by a user. For example, when a network device needs to be deployed as a performance monitoring node, the user enables a performance monitoring function of the network device, and the network device performs the following method 200 under triggering of an enabling instruction.

The control management device in the system architecture 100 includes, but is not limited to, a network management device or a controller. The network management device is, for example, an OSS 110 in FIG. 1. The controller is, for example, an SDN controller (SDN controller) in software-defined networking (English: Software-Defined Networking, SDN for short) or a virtualized network function manager (English: virtualized network function manager, VNFM for short) in network functions virtualization (English: Network Functions Virtualization, NFV for short). A physical entity of the control management device is, for example, a host, a server, or a personal computer. A type of the control and management device is not limited in this embodiment.

A manner of communication between the network device and the control management device in the system architecture 100 includes a plurality of implementations. For example, the network device communicates with the control management device through telemetry or an SNMP. Certainly, the telemetry and the SNMP are optional manners for implementing the communication. In some other embodiments, the network device communicates with the control management device based on a network configuration (Network Configuration, NETCONF) protocol.

The foregoing describes the system architecture 100. The following describes, using the method 200, an example of a procedure of a network performance monitoring method based on the system architecture provided above.

FIG. 2 is a flowchart of a network performance monitoring method 200 according to an embodiment of this application. For example, the method 200 includes S201 to S205.

Optionally, the method 200 is performed by the network device in the system architecture 100, and is specifically performed by a forwarding plane and a control plane in the same network device. The forwarding plane is configured to undertake processing work corresponding to S201, and the control plane is configured to undertake processing work corresponding to S202 to S205.

S201. The forwarding plane samples network performance data based on a first time periodicity, and records a quantity of network performance exceptions.

The first time periodicity is a sampling periodicity in which the forwarding plane collects the network performance data. Specifically, the forwarding plane samples the network performance data once every first time periodicity, to record the quantity of network performance exceptions based on the network performance data obtained through sampling. A granularity or a time length of the first time periodicity includes a plurality of cases. Optionally, the first time periodicity is in milliseconds. For example, if the first time periodicity is 1 millisecond, the forwarding plane collects the network performance data once every millisecond. The forwarding plane samples the network performance data based on a millisecond-level sampling periodicity. This helps implement millisecond-level performance monitoring. For example, the network performance data is represented by a letter p. Each time N milliseconds elapse, the forwarding plane obtains N pieces of network performance data through sampling, which are respectively p₁, p₂, p₃, ..., and pₙ, where pᵢ represents network performance data collected at an i^{th} millisecond, and i is a positive integer greater than or equal to 1 and less than or equal to n. Optionally, the network performance data is data internally collected by the forwarding plane, and is not reported to an OSS for presentation to a user.

The network performance data indicates network performance, for example, indicates forwarding performance of the forwarding plane. Optionally, the network performance data includes at least one of the following: a delay, packet loss, jitter, bandwidth, a transmission rate, a bit error, and an error packet. Optionally, a monitored object of the network performance includes at least one of a physical port, a tunnel, a pseudo wire, or a virtual interface, and correspondingly, the network performance data includes at least one of network performance data of the physical port, network performance data of the tunnel, network performance data of the pseudo wire, or network performance data of the virtual interface. Optionally, different components of the forwarding plane are responsible for sampling network performance data of different monitored objects. For example, the network performance data of the physical port is sampled by a physical interface card, and the network performance data of the tunnel and the network performance data of the pseudo wire are sampled by an NP.

How the forwarding plane records the quantity of network performance exceptions includes a plurality of implementations. For example, after obtaining the network performance data through each sampling, the forwarding plane determines whether the network performance data obtained through sampling meets a preset condition. When the network performance data obtained through each sampling meets the preset condition, the forwarding plane records one network performance exception.

Setting of the preset condition includes a plurality of implementations. Optionally, the preset condition includes: a value of the network performance data obtained through each sampling is greater than or equal to a second threshold. The second threshold may be referred to as a performance threshold-crossing threshold or a performance degradation threshold. When the preset condition is set using a threshold, the quantity of network performance exceptions is also referred to as a quantity of threshold-crossing times. The second threshold may be set based on a requirement or an actual network status. The second threshold includes, but is not limited to, at least one of a delay threshold, a packet loss threshold, a jitter threshold, a bandwidth threshold, a transmission rate threshold, a bit error threshold, and an error packet threshold. For example, the network performance data is the transmission rate, and the second threshold is 70%. Optionally, the second threshold is preset by the user when the user enables a network performance monitoring function, or the second threshold is a default value. For example, the first time periodicity is one millisecond. The forwarding plane compares network performance data collected every millisecond with the second threshold. If the network performance data collected every millisecond is greater than or equal to the second threshold, the forwarding plane records one network performance exception.

Optionally, network performance monitoring may have a plurality of exception levels, and the forwarding plane records a quantity of network performance exceptions corresponding to each exception level in the plurality of exception levels. Specifically, the plurality of exception levels respectively correspond to a plurality of preset conditions, and preset conditions corresponding to different exception levels may be different. After obtaining the network performance data through each sampling, the forwarding plane separately determines whether the network performance data meets the plurality of preset conditions. For one exception level of the plurality of exception levels, when the network performance data obtained through each sampling meets a preset condition corresponding to the exception level, the forwarding plane records one network performance exception corresponding to the exception level.

How to set a corresponding preset condition for an exception level includes a plurality of implementations. In a possible implementation, a plurality of third thresholds are separately set for the plurality of exception levels, and the third threshold may be referred to as a performance threshold-crossing threshold corresponding to a level or a performance degradation threshold corresponding to a level. The preset condition corresponding to the exception level includes: the value of the network performance data obtained through each sampling is greater than or equal to a third threshold corresponding to the exception level. The plurality of third thresholds may be in a one-to-one correspondence with the plurality of exception levels. The third threshold and the second threshold described above may be the same, or may be different. A third threshold corresponding to each exception level is preset by the user when the user enables the network performance monitoring function, or a third threshold corresponding to each exception level is a default value. The third threshold includes, but is not limited to, at least one of a delay threshold, a packet loss threshold, a jitter threshold, a bandwidth threshold, a transmission rate threshold, a bit error threshold, and an error packet threshold.

Optionally, a higher exception level indicates a higher third threshold corresponding to the exception level. For example, the network performance data is the transmission rate of the physical port, and the third threshold is a transmission rate threshold of the physical port. In two exception levels included in the plurality of exception levels, a transmission rate threshold corresponding to a lower exception level is 70%, and a transmission rate threshold corresponding to a higher exception level is 85%.

For example, the third threshold is represented by a letter M, the network performance data is represented by a letter p, and the quantity of network performance exceptions is represented by letters mum. N third thresholds from a threshold M₁ to a threshold Mₙ may be set for N exception levels from an exception level 1 to an exception level n. The forwarding plane records, based on the N third thresholds, quantities of N network performance exceptions from mum₁ to mumₙ. Mᵢ represents a third threshold corresponding to an exception level i, and mumᵢ represents a quantity of network performance exceptions corresponding to the exception level i, where i is a positive integer greater than or equal to 1 and less than or equal to n. For example, the first time periodicity is 1 millisecond. After obtaining network performance data pₖ through sampling at a k^{th} millisecond, the forwarding plane separately compares the network performance data pₖ with the threshold M₁ to the threshold Mₙ. If the threshold Mᵢ < the network performance data pₖ < a threshold Mᵢ₊₁, the forwarding plane increases a value of the quantity mumᵢ by one. In other words, for two adjacent exception levels in the plurality of exception levels, if a value of current network performance data obtained through sampling is greater than a threshold corresponding to a previous exception level and less than a threshold corresponding to a next exception level, a quantity of network performance exceptions corresponding to the previous exception level is accumulated by one.

Optionally, the forwarding plane not only records the quantity of network performance exceptions based on the network performance data, but also determines a network performance parameter in a second time periodicity based on the network performance data obtained through each sampling.

The network performance parameter includes, but is not limited to, at least one of a maximum value of network performance data in the second time periodicity, a minimum value of the network performance data in the second time periodicity, or an average value of the network performance data in the second time periodicity. With reference to a specific type of the network performance data, optionally, the network performance parameter includes at least one of a maximum delay, a minimum delay, an average delay, a packet loss rate, jitter, bandwidth, a transmission rate, a bit error rate, or a packet error rate.

How to calculate the maximum value of the network performance data in the second time periodicity includes a plurality of implementations. For example, the second time periodicity is represented by a letter T, and the maximum value of the network performance data in the periodicity T is represented by letters Max. For example, the first time periodicity is 1 millisecond. After obtaining network performance data through sampling at each millisecond in the periodicity T, the forwarding plane compares a value of the network performance data collected this time with the value Max. To obtain the maximum value of the network performance data in the periodicity T, if the value of the network performance data collected this time is greater than the recorded value Max, the forwarding plane updates the recorded value Max to the value of the network performance data collected this time; or if the value of the network performance data collected this time is less than or equal to the recorded value Max, the forwarding plane keeps the recorded value Max unchanged.

How to calculate the minimum value of the network performance data in the second time periodicity includes a plurality of implementations. For example, the second time periodicity is represented by a letter T, and the minimum value of the network performance data in the periodicity T is represented by letters Min. For example, the first time periodicity is 1 millisecond. After obtaining network performance data through sampling at each millisecond in the periodicity T, the forwarding plane compares a value of the network performance data collected this time with the value Min. To obtain the maximum value of the network performance data in the periodicity T, if the value of the network performance data collected this time is less than the recorded value Min, the forwarding plane updates the recorded value Min to the value of the network performance data collected this time; or if the value of the network performance data collected this time is greater than or equal to the recorded value Min, the forwarding plane keeps the recorded value Min unchanged.

How to calculate the average value of the network performance data in the second time periodicity includes a plurality of implementations. For example, the second time periodicity is represented by a letter T, and the average value of the network performance data in the periodicity T is represented by letters Avg. For example, the first time periodicity is 1 millisecond. The forwarding plane performs average calculation on values of network performance data obtained through sampling at all milliseconds in the periodicity T, to obtain the average value Avg of the network performance data in the periodicity T.

S202. The control plane determines that a quantity of network performance exceptions in the second time periodicity is greater than a first threshold.

Duration of the second time periodicity is greater than duration of the first time periodicity. A granularity or a time length of the second time periodicity includes a plurality of cases. Optionally, when the first time periodicity is in milliseconds, the second time periodicity is at least in seconds. In other words, the duration of the second time periodicity is greater than or equal to one second. For example, the second time periodicity is 1 second, 10 seconds, 30 seconds, 1 minute, 5 minutes, 15 minutes, 30 minutes, or 1 hour. Optionally, the duration of the second time periodicity is preset by the user when the user enables the network performance monitoring function, or the duration of the second time periodicity is a default value. For example, the default value is 30 seconds.

The first threshold may be referred to as an alarm threshold. Optionally, the first threshold is preset by the user when the user enables the network performance monitoring function, or the first threshold is a default value. Every second time periodicity, the control plane compares the quantity of network performance exceptions in the second time periodicity with the first threshold. If the quantity of network performance exceptions recorded by the forwarding plane is greater than the first threshold, the control plane generates an alarm. For example, the second time periodicity is represented by a letter T, the quantity of network performance exceptions is represented by letters mum, and the first threshold is represented by letters Alam-num. The control plane compares mum with Alam-num. If mum is greater than Alam-num, to be specific, a quantity of times that the quantity of network performance exceptions in the second time periodicity is greater than the first threshold reaches the alarm threshold, the control plane reports that the alarm is generated.

It can be learned from a quantity relationship between the first time periodicity and the second time periodicity that a periodicity in which the forwarding plane performs data sampling and quantity recording is fine-grained, and a periodicity in which the control plane performs reporting is coarse-grained. Therefore, by implementing this embodiment, the forwarding plane and the control plane collaboratively monitor network performance. This meets a requirement of fine-grained network performance monitoring, and reduces dependency on performance of a CPU and consumption of bandwidth resources for massive data reporting by the control plane.

In this embodiment, the control plane may obtain the quantity of network performance exceptions from the forwarding plane. Specifically, how to obtain the quantity of network performance exceptions includes a plurality of implementations. The following uses an implementation 1 and an implementation 2 as examples for description.

Implementation 1: The control plane actively reads the quantity of network performance exceptions.

Optionally, after recording the quantity of network performance exceptions, the forwarding plane stores the quantity of network performance exceptions in a memory, and the control plane reads the quantity of network performance exceptions from the memory. The memory configured to store the quantity of network performance exceptions includes a plurality of cases. For example, the memory is a memory in an interface board on which the forwarding plane is located, for example, a register on a physical interface card. For another example, the memory is a memory in an interface board (for example, a main control board) on which the control plane is located. A type of the memory is not limited in this embodiment.

Implementation 2: The control plane receives the quantity of network performance exceptions reported by the forwarding plane.

Optionally, after the forwarding plane records the quantity of network performance exceptions, the forwarding plane sends the quantity of network performance exceptions to the control plane, and the control plane receives the quantity of network performance exceptions.

S203. The control plane generates the alarm.

The alarm generated by the control plane includes a plurality of cases. The following uses case A and case B as examples for description.

Case A: The alarm generated by the control plane includes an alarm indication signal, where the alarm indication signal may be output in a form of data such as on/off or a flashing frequency of an alarm indicator, or alarm audio. For example, the alarm indication signal may be an alert.

Case B: The alarm generated by the control plane includes alarm information, where the alarm information indicates that the quantity of network performance exceptions is greater than the first threshold. Content of the alarm information includes a plurality of cases. For example, the alarm information includes at least one of an alarm type, alarm source information, or a timestamp. The following separately describes the several types of information in detail.

The alarm type includes at least one of a delay exception, a packet loss exception, a jitter exception, a bandwidth exception, a transmission rate exception, a bit error exception, or an error packet exception. When the alarm type of the alarm information is the delay exception, the alarm information indicates that a quantity of delay exceptions is greater than the first threshold. When the alarm type of the alarm information is the transmission rate exception, the alarm information indicates that a quantity of transmission rate exceptions is greater than the first threshold. For example, a quantity of times that a port rate is excessively slow is greater than the first threshold, and other alarm types are similar. The alarm type is carried in the alarm information. Therefore, a specific network performance exception event can be clearly indicated, in other words, which type of network performance data that is abnormal can be specified.

The alarm source information indicates a network device that generates the alarm information. The alarm source information is, for example, a name of a network device on which the control plane is located or an internet protocol (internet protocol, IP) address of the network device on which the control plane is located. The alarm source information is carried in the alarm information. Therefore, which network device that is in a network and that detects the network performance exception can be clearly indicated.

The timestamp indicates a time point at which the quantity of network performance exceptions is greater than the first threshold. For example, when determining that the quantity of network performance exceptions in the second time periodicity is greater than the first threshold, the control plane may write a timestamp of a current time point into the alarm information. The timestamp is carried in the alarm information. Therefore, when the control plane detects the network performance exception can be clearly indicated.

Optionally, when the plurality of exception levels are set for the network performance monitoring, the alarm information further includes the exception levels. Alarm information of different exception levels is different, to help clearly indicate which exception level of network performance exception event occurs. For example, the alarm information includes an alarm name, and alarm names in alarm information of different exception levels are different. For another example, the alarm information includes an alarm parameter, and alarm parameters in alarm information of different exception levels are different.

Specifically, the control plane separately compares quantities of network performance exceptions corresponding to the plurality of exception levels in the second time periodicity with the first threshold. For one exception level in the plurality of exception levels, if the control plane determines that a quantity of network performance exceptions corresponding to the exception level in the second time periodicity is greater than the first threshold, the control plane generates alarm information indicating the exception level. For example, the second time periodicity is represented by a letter T, a quantity of network performance exceptions corresponding to an exception level n is represented by letters numₙ, and the first threshold is represented by letters Alam-num. The control plane compares numₙ with Alam-num. If the control plane determines that numₙ is greater than Alam-num within T, the control plane generates Alamₙ. Alamₙ represents alarm information indicating the exception level n.

Optionally, if the control plane determines that all quantities of network performance exceptions corresponding to the plurality of exception levels in the second time periodicity are greater than the first threshold, the control plane generates alarm information indicating a highest exception level in the plurality of exception levels. For example, the first threshold is represented by letters Alam-num. If a quantity of network performance exceptions corresponding to an exception level 1 is greater than Alam-num, a quantity of network performance exceptions corresponding to an exception level 2 is also greater than Alam-num, and a quantity of network performance exceptions corresponding to an exception level 3 is also greater than Alam-num, the control plane generates Alam₃. Alam₃ represents alarm information indicating the exception level 3.

In this manner, if a plurality of exception levels meet corresponding thresholds (the third thresholds) at a same time, the control plane can report only the alarm information of the highest exception level to an upper-layer OSS, and suppress reporting of alarm information of a lower exception level. In this manner, a quantity of reported alarm information can be reduced, and interference to the user that is caused by excessive alarm information can be avoided.

S204. The control plane sends the alarm to a control management device.

For example, the control plane reports the alarm to the control and management device through telemetry or the SNMP protocol and on a DCN channel or an out-of-band DCN channel between devices. For example, refer to a system architecture 100 shown in FIG. 1. The network device on which the control plane is located is, for example, an access network device 101. After generating the alarm, the access network device 101 sends the alarm to an OSS 110. After receiving the alarm, the control management device may analyze and present the alarm. By reporting the alarm to the control management device, the control plane can notify a carrier in time that a performance exception event occurs in a network. This helps the carrier adjust a network status in time, and helps resolve a problem of the network performance exception in time, to avoid affecting user experience.

Optionally, after the control plane obtains the network performance parameter in the second time periodicity, the control plane further sends the network performance parameter to the control management device, for example, sends the maximum value of the network performance data in the second time periodicity, the minimum value of the network performance data in the second time periodicity, and the average value of the network performance data in the second time periodicity. Optionally, the control plane reports the network performance parameter to the control management device through the telemetry or the SNMP protocol and on the DCN channel or the out-of-band DCN channel between devices. After receiving the network performance parameter, the control management device may analyze and present the network performance parameter.

An occasion or a trigger condition for reporting the network performance parameter specifically includes a plurality of cases. The following uses case I and case II as examples for description.

Case I: The control plane reports the network performance parameter based on the second time periodicity. In other words, the control plane sends the network performance parameter to the control management device once every second time periodicity. Optionally, in case I, reporting of the network performance parameter does not depend on reporting of the alarm. For example, when the quantity of network performance exceptions in the second time periodicity is greater than, less than, or equal to the first threshold, the control plane reports the network performance parameter in the second time periodicity.

Case II: The control plane reports the network performance parameter when reporting the alarm. In other words, when the control plane determines that the network performance parameter in the second time periodicity is greater than the first threshold, the control plane sends the alarm and the network performance parameter in the second time periodicity to the control management device.

When this manner is used, the second time periodicity may be a reporting periodicity in which the control plane sends the network performance parameter.

It should be understood that S204 is an optional step. In some other embodiments, the control plane does not perform S204. For example, the control plane outputs an alert to prompt the user that a network performance exception is detected.

Optionally, the control plane further reports the quantity of network performance exceptions. Specifically, after obtaining the quantity of network performance exceptions, the control plane further sends the quantity of network performance exceptions to the control management device, and the control management device receives the quantity of network performance exceptions, and analyzes and presents the quantity of network performance exceptions. When the network performance monitoring has the plurality of exception levels, optionally, the control plane sends, to the control management device, the quantity of network performance exceptions corresponding to each exception level in the plurality of exception levels. When the network performance data includes at least one of the delay, the packet loss, the jitter, the bandwidth, the transmission rate, the bit error, and the error packet, optionally, the control plane sends at least one of a quantity of delay exceptions, a quantity of packet loss exceptions, a quantity of jitter exceptions, a quantity of bandwidth exceptions, a quantity of transmission rate exceptions, a quantity of bit error exceptions, and a quantity of error packet exceptions to the control management device.

An occasion or a trigger condition for reporting the quantity of network performance exceptions specifically includes a plurality of cases. The following uses case a and case b as examples for description.

Case a: The control plane reports the quantity of network performance exceptions based on the second time periodicity. In other words, the control plane sends the quantity of network performance exceptions to the control management device once every second time periodicity. Optionally, in case a, reporting of the quantity of network performance exceptions does not depend on the reporting of the alarm. For example, when the quantity of network performance exceptions in the second time periodicity is greater than, less than, or equal to the first threshold, the control plane reports the quantity of network performance exceptions in the second time periodicity.

Case b: The control plane reports the quantity of network performance exceptions when reporting the alarm. In other words, when the control plane determines that the quantity of network performance exceptions in the second time periodicity is greater than the first threshold, the control plane sends the alarm and the quantity of network performance exceptions in the second time periodicity to the control management device.

S205. If all quantities of network performance exceptions in a plurality of consecutive second time periodicities after the second time periodicity are less than the first threshold, the control plane cancels the alarm.

Optionally, the control plane supports an alarm canceling function. Specifically, after the control plane determines that the quantity of network performance exceptions in the second time periodicity is greater than the first threshold and generates the alarm, the forwarding plane continues to sample the network performance data based on the first time periodicity, and continues to record the quantity of network performance exceptions. The control plane continues to determine, based on the quantity of network performance exceptions recorded by the forwarding plane, whether the quantity of network performance exceptions in each second time periodicity after the second time periodicity is less than the first threshold. If all the quantities of network performance exceptions in the plurality of consecutive second time periodicities after the second time periodicity in which the network performance exception occurs are less than the first threshold, the control plane cancels the alarm. Optionally, a manner of canceling the alarm is sending, to the control management device, a notification message indicating that the alarm disappears. For example, the second time periodicity is represented by a letter T. After the control plane reports an alarm Alamₙ in a periodicity Tᵢ, if all quantities of network performance exceptions recorded in N consecutive periodicities from a periodicity Tᵢ₊₁ to a periodicity T_{1+N} after the periodicity Tᵢ are less than the threshold Alam-num, the control plane reports that the alarm Alamₙ disappears. Optionally, N is preset by the user when the user enables the network performance monitoring function, or N is a default value. For example, N is 3. After reporting the alarm, the control plane cancels the alarm based on the quantities of network performance exceptions in the plurality of consecutive periodicities, so that a long-term residue of the generated alarm can be avoided. In addition, by canceling the alarm, the control plane can notify the carrier that the network performance is normal and a fault that causes the network performance exception has been rectified. It should be understood that S205 is an optional step. In some other embodiments, the control plane does not perform S205.

According to the method provided in this embodiment, the forwarding plane samples the network performance data based on a fine-grained time periodicity, and records the quantity of network performance exceptions; and the control plane generates, based on a coarse-grained time periodicity, the alarm when the quantity of network performance exceptions recorded by the forwarding plane is greater than a threshold. On a basis of meeting a fine-grained requirement on the network performance monitoring, because the control plane does not need to report all the collected network performance data, a volume of data that needs to be reported by the control plane is greatly reduced. This resolves a problem of overload of a main control CPU that is caused by the massive data reporting, and reduces dependency of the network performance monitoring on performance of the main control CPU of a device. This further resolves a problem that a large quantity of bandwidth resources are occupied due to the massive data reporting, reduces dependency of the network performance monitoring on the bandwidth resources, and helps meet a requirement for deploying a large quantity of performance monitoring nodes in a live network.

The foregoing describes the method 200 in embodiments of this application, and the following describes a network device in embodiments of this application. It should be understood that the network device described below has any function of the forwarding plane and the control plane in the foregoing method 200.

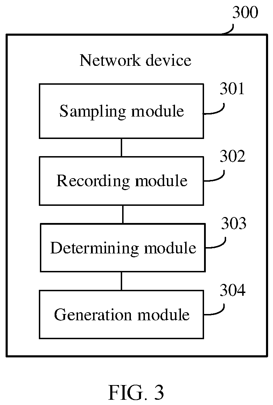

FIG. 3 is a schematic diagram of a structure of a network device 300 according to an embodiment of this application. As shown in FIG. 3, the network device 300 includes: a sampling module 301, configured to perform a sampling step in S201; a recording module 302, configured to perform a recording step in S201; a determining module 303, configured to perform S202; and a generation module 304, configured to perform S203.

Optionally, the network device 300 further includes a sending module, configured to perform S204.

Optionally, the network device 300 further includes a canceling module, configured to perform S205.

It should be understood that the sampling module 301 and the recording module 302 correspond to the forwarding plane in the foregoing method 200, and the sampling module 301 and the recording module 302 are configured to implement various steps and methods implemented by the forwarding plane in the method 200. In other words, the sampling module 301 and the recording module 302 belong to a same concept as the foregoing forwarding plane. For a specific implementation process of the sampling module 301 and the recording module 302, refer to a procedure corresponding to the forwarding plane in the method 200. Details are not described herein again.

It should be understood that the determining module 303, the generation module 304, the sending module, and the canceling module correspond to the control plane in the foregoing method 200, and the determining module 303, the generation module 304, the sending module, and the canceling module are configured to implement various steps and methods implemented by the control plane in the method 200. In other words, the determining module 303, the generation module 304, the sending module, and the canceling module belong to a same concept as the foregoing control plane. For a specific implementation process of the determining module 303, the generation module 304, the sending module, and the canceling module, refer to a procedure corresponding to the control plane in the method 200. Details are not described herein again.

It should be understood that each functional module in the network device 300 is implemented using software. For example, the sampling module 301 and the recording module 302 are virtual modules generated after a processor of the forwarding plane reads program code. The determining module 303, the generation module 304, the sending module, and the canceling module are virtual modules generated after a processor of the control plane reads program code.

It should be understood that when the network device 300 monitors network performance, division of the foregoing functional modules is merely used as an example for description. In actual implementation, the foregoing functions may be allocated to different modules and implemented according to a requirement. In other words, inner structures of the forwarding plane and the control plane are divided into different functional modules to implement all or a part of the functions described above.

In Correspondence to the method embodiment and the virtual apparatus embodiment provided in this application, an embodiment of this application further provides a network device 400. The following describes a hardware structure of the network device 400.

The network device 400 corresponds to the forwarding plane and the control plane in the foregoing method 200. Hardware, modules, and the foregoing other operations and/or functions of the network device 400 are separately used to implement various steps and methods implemented by the forwarding plane and the control plane in the method 200. For a specific procedure about how the network device 400 monitors network performance, refer to the foregoing method 200. For brevity, details are not described herein again. The steps of the method 200 are completed using an integrated logic circuit of hardware in a processor of the network device 400 or instructions in a form of software. The steps of the method disclosed with reference to embodiments of this application may be directly performed by a hardware processor, or may be performed using a combination of the hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware in the processor. To avoid repetition, details are not described herein again.

The network device 400 corresponds to the network device 300 in the foregoing virtual apparatus embodiment, and each functional module in the network device 300 is implemented using software of the network device 400. In other words, the functional modules included in the network device 300 are generated after the processor of the network device 400 reads program code stored in the memory.

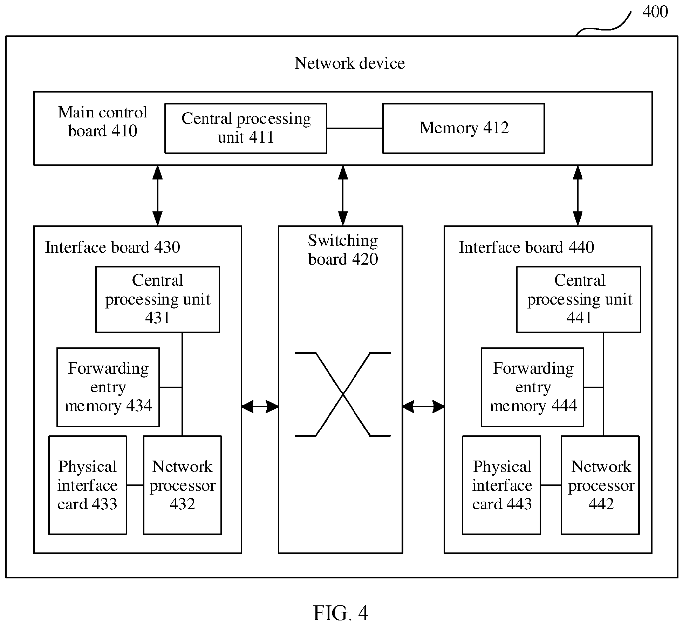

FIG. 4 is a schematic diagram of a structure of a network device according to an example embodiment of this application. The network device 400 includes a main control board 410 and an interface board 430.

The main control board is also referred to as a main processing unit (main processing unit, MPU) or a route processor card (route processor card). The main control board 410 is configured to control and manage components in the network device 400, including route computation, device management, device maintenance, and protocol-based processing. The main control board 410 includes a central processing unit 411 and a memory 412.

The interface board 430 is also referred to as a line processing unit (line processing unit, LPU), a line card (line card), or a service board. The interface board 430 is configured to: provide various service interfaces, and forward a data packet. The service interfaces include, but are not limited to, an Ethernet interface, a POS (Packet over SONET/SDH) interface, and the like. The Ethernet interface is, for example, a flexible Ethernet service interface (Flexible Ethernet Clients, FlexE Clients). The interface board 430 includes a central processing unit 431, a network processor 432, a forwarding entry memory 434, and a physical interface card (physical interface card, PIC) 433.

The central processing unit 431 on the interface board 430 is configured to: control and manage the interface board 430, and communicate with the central processing unit 411 on the main control board 410.

The network processor 432 is configured to forward a packet. A form of the network processor 432 may be a forwarding chip. Specifically, the network processor 432 is configured to forward a received packet based on a forwarding table stored in the forwarding entry memory 434. If a destination address of the packet is an address of the network device 400, the network processor 432 sends the packet to a CPU (for example, the central processing unit 411) for processing. If a destination address of the packet is not an address of the network device 400, the network processor 432 searches for, based on the destination address, a next hop and an outbound interface corresponding to the destination address in the forwarding table, and forwards the packet to the outbound interface corresponding to the destination address. Processing on an uplink packet includes processing at a packet inbound interface and forwarding table searching. Processing on a downlink packet includes forwarding table searching and the like.

The physical interface card 433 is configured to implement a physical layer interconnection function. Original traffic enters the interface board 430 from the physical interface card 433, and a processed packet is sent out from the physical interface card 433. The physical interface card 433, also referred to as a subcard, may be mounted on the interface board 430, and is responsible for converting an optical/electrical signal into a packet, performing validity check on the packet, and forwarding the packet to the network processor 432 for processing. In some embodiments, the central processing unit may also perform a function of the network processor 432, for example, implement software forwarding based on a general-purpose CPU. Therefore, the network processor 432 is not required in the physical interface card 433.

Optionally, the network device 400 includes a plurality of interface boards. For example, the network device 400 further includes an interface board 440, and the interface board 440 includes a central processing unit 441, a network processor 442, a forwarding entry memory 444, and a physical interface card 443.

Optionally, the network device 400 further includes a switching board 420. The switching board 420 may also be referred to as a switch fabric unit (switch fabric unit, SFU). When the network device has a plurality of interface boards 430, the switching board 420 is configured to complete data exchange between the interface boards. For example, the interface board 430 and the interface board 440 may communicate with each other via the switching board 420.

The main control board 410 is coupled to the interface board 430. For example: the main control board 410, the interface board 430, the interface board 440, and the switching board 420 are connected to a system backplane through a system bus to implement interworking. In a possible implementation, an inter-process communication (inter-process communication, IPC) channel is established between the main control board 410 and the interface board 430, and the main control board 410 and the interface board 430 communicate with each other on the IPC channel.

Logically, the network device 400 includes a control plane and a forwarding plane. The control plane includes the main control board 410 and the central processing unit 431. The forwarding plane includes components used for forwarding, for example, the forwarding entry memory 434, the physical interface card 433, and the network processor 432. The control plane performs functions such as routing, generating a forwarding table, processing signaling and a protocol packet, and configuring and maintaining a device status. The control plane delivers the generated forwarding table to the forwarding plane. On the forwarding plane, the network processor 432 searches the forwarding table delivered by the control plane to forward a packet received by the physical interface card 433. The forwarding table delivered by the control plane may be stored in the forwarding entry memory 434.

In a process of implementing the method 200, the interface board 430 or the interface board 440 is configured to perform steps corresponding to the forwarding plane. For example, a monitored object of network performance is a physical port. The physical interface card 433 samples network performance data of the physical port in the physical interface card 433 based on a first time periodicity, records a quantity of network performance exceptions, and stores the quantity of network performance exceptions in the forwarding entry memory 434. For example, a monitored object of network performance is a tunnel. The network processor 432 samples network performance data of the tunnel based on a first time periodicity, records a quantity of network performance exceptions, and stores the quantity of network performance exceptions in the forwarding entry memory 434.

In the process of implementing the method 200, the main control board 410 is configured to perform steps corresponding to the control plane. For example, the central processing unit 431 reads the quantity of network performance exceptions from the forwarding entry memory 434, and determines that a quantity of network performance exceptions in a second time periodicity is greater than a first threshold, and the central processing unit 431 generates an alarm.

It should be understood that the sampling module 301 and the recording module 302 in the network device 300 are equivalent to the interface board 430 or the interface board 440 in the network device 400; and the determining module 303, the generation module 304, the sending module, and the canceling module in the network device 300 may be equivalent to the main control board 410.

It should be understood that an operation on the interface board 440 is consistent with an operation on the interface board 430 in this embodiment of this application. For brevity, details are not described again.

It should be noted that, there may be one or more main control boards, and when there are a plurality of main control boards, the main control boards may include a primary main control board and a secondary main control board. There may be one or more interface boards; and a network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board provides a function of processing service data in an entire system. In a distributed forwarding architecture, the network device may have at least one switching board, and data exchange between a plurality of interface boards is implemented using the switching board, to provide a large-capacity data exchange and processing capability. Therefore, a data access and processing capability of the network device in the distributed architecture is better than that of the device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined to form one central processing unit on the card, to perform functions obtained by combining the two central processing units. This form of device (for example, a network device such as a low-end switch or a router) has a weak data exchange and processing capability. A specific architecture that is to be used depends on a specific networking deployment scenario. This is not limited herein.

In some possible embodiments, the forwarding plane and the control plane may be alternatively implemented using a computer program product. Specifically, an embodiment of this application provides a computer program product. When the computer program product runs on a network device, a forwarding plane and a control plane of the network device are enabled to separately perform the network performance monitoring method in the foregoing method 200.

It should be understood that the forwarding plane and the control plane in the foregoing various product forms respectively have any function of the forwarding plane and the control plane in the foregoing method 200. Details are not described herein again.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiment. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments of this application.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for indicating a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by software, hardware, firmware, or any combination thereof. When software is used to implement embodiments, all or some of the embodiments may be implemented in a form of a computer program product. The computer program product includes one or more computer program instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer program instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive), or the like.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

In this application, terms such as "first" and "second" are used to distinguish between same items or similar items that have basically same functions. It should be understood that there is no logical or time sequence dependency between "first" and "second", and a quantity and an execution sequence are not limited. It should be further understood that although the terms such as "first" and "second" are used in the following descriptions to describe various elements, these elements should not be limited by the terms. These terms are merely used to distinguish one element from another element. For example, without departing from the scope of the various examples, a first threshold may be referred to as a second threshold, and similarly, a second threshold may be referred to as a first threshold. Both the first threshold and the second threshold may be thresholds, and in some cases may be separate and different thresholds.

In this application, the term "at least one" means one or more, and the term "a plurality of" means two or more. For example, a plurality of second packets mean two or more second packets. The terms "system" and "network" may be used interchangeably in this specification.

It should be further understood that the term "if" may be interpreted as a meaning "when" ("when" or "upon"), "in response to determining", or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

The foregoing descriptions are merely optional embodiments of this application, but are not intended to limit this application. Any modification, equivalent replacement, or improvement made without departing from the spirit and principle of this application shall fall within the protection scope of this application.

## Claims

1. A network performance monitoring method, wherein the method comprises:
sampling, by a forwarding plane, network performance data based on a first time periodicity, and recording a quantity of network performance exceptions, wherein when network performance data obtained through each sampling meets a preset condition, one network performance exception is recorded, and the first time periodicity is a sampling periodicity in which the forwarding plane collects the network performance data;
determining, by a control plane, that a quantity of network performance exceptions in a second time periodicity is greater than a first threshold, wherein duration of the second time periodicity is greater than duration of the first time periodicity; and
generating, by the control plane, an alarm.

2. The method according to claim 1, wherein the first time periodicity is in milliseconds, and the second time periodicity is at least in seconds.

3. The method according to claim 1 or 2, wherein the preset condition comprises:
a value of the network performance data obtained through each sampling is greater than or equal to a second threshold.

4. The method according to any one of claims 1 to 3, wherein
the recording a quantity of network performance exceptions comprises: recording a quantity of network performance exceptions corresponding to each exception level in a plurality of exception levels, wherein the plurality of exception levels respectively correspond to a plurality of preset conditions, and when the network performance data obtained through each sampling meets a preset condition corresponding to an exception level, one network performance exception corresponding to the exception level is recorded.

5. The method according to claim 4, wherein the determining, by a control plane, that a quantity of network performance exceptions in a second time periodicity is greater than a first threshold comprises:
determining, by the control plane, that all quantities of network performance exceptions corresponding to the plurality of exception levels in the second time periodicity are greater than the first threshold; and
the generating, by the control plane, an alarm comprises:
generating, by the control plane, alarm information indicating a highest exception level in the plurality of exception levels.

6. The method according to claim 4 or 5, wherein the preset condition corresponding to the exception level comprises: the value of the network performance data obtained through each sampling is greater than or equal to a third threshold corresponding to the exception level, and a higher exception level indicates a higher third threshold corresponding to the exception level.

7. The method according to claim 1, wherein the network performance data comprises at least one of the following: a delay, packet loss, jitter, bandwidth, a transmission rate, a bit error, and an error packet.

8. The method according to claim 7, wherein the method further comprises:
determining, by the forwarding plane, a network performance parameter in the second time periodicity based on the network performance data obtained through each sampling; and
obtaining, by the control plane, the network performance parameter.

9. The method according to claim 8, wherein the network performance parameter comprises at least one of the following:
a maximum delay;
a minimum delay;
an average delay;
a packet loss rate;
jitter;
bandwidth;
a transmission rate;
a bit error rate; and
a packet error rate.

10. The method according to claim 1, wherein after the generating, by the control plane, an alarm, the method further comprises:
sending, by the control plane, the alarm to a control management device.

11. The method according to claim 10, wherein after the sending, by the control plane, the alarm to a control management device, the method further comprises:
canceling, by the control plane, the alarm if all quantities of network performance exceptions in a plurality of consecutive second time periodicities after the second time periodicity are less than the first threshold.

12. A network device, wherein the network device comprises:
a sampling module, configured to sample network performance data based on a first time periodicity, wherein the first time periodicity is a sampling periodicity in which the network performance data is collected;
a recording module, configured to record a quantity of network performance exceptions, wherein when network performance data obtained through each sampling meets a preset condition, one network performance exception is recorded;
a determining module, configured to determine that a quantity of network performance exceptions in a second time periodicity is greater than a first threshold, wherein duration of the second time periodicity is greater than duration of the first time periodicity; and
a generation module, configured to generate an alarm.

13. The device according to claim 12, wherein the first time periodicity is in milliseconds, and the second time periodicity is at least in seconds.

14. The device according to claim 12 or 13, wherein the preset condition comprises:
a value of the network performance data obtained through each sampling is greater than or equal to a second threshold.

15. The device according to any one of claims 12 to 14, the recording module is configured to record a quantity of network performance exceptions corresponding to each exception level in a plurality of exception levels, wherein the plurality of exception levels respectively correspond to a plurality of preset conditions, and when the network performance data obtained through each sampling meets a preset condition corresponding to an exception level, one network performance exception corresponding to the exception level is recorded.

16. The device according to claim 15, wherein the determining module is configured to determine that all quantities of network performance exceptions corresponding to the plurality of exception levels in the second time periodicity are greater than the first threshold; and
the generation module is configured to generate alarm information indicating a highest exception level in the plurality of exception levels.

17. The device according to claim 15 or 16, wherein the preset condition corresponding to the exception level comprises: the value of the network performance data obtained through each sampling is greater than or equal to a third threshold corresponding to the exception level, and a higher exception level indicates a higher third threshold corresponding to the exception level.

18. The device according to claim 12, wherein the network performance data comprises at least one of the following: a delay, packet loss, jitter, bandwidth, a transmission rate, a bit error, and an error packet.

19. The device according to claim 18, wherein the determining module is further configured to determine a network performance parameter in the second time periodicity based on the network performance data obtained through each sampling.

20. The device according to claim 19, wherein the network performance parameter comprises at least one of the following:
a maximum delay;
a minimum delay;
an average delay;
a packet loss rate;
jitter;
bandwidth;
a transmission rate;
a bit error rate; and
a packet error rate.

21. The device according to claim 12, wherein the device further comprises:
a sending module, configured to send the alarm to a control management device.

22. The device according to claim 21, wherein the device further comprises:
a canceling module, configured to cancel the alarm if all quantities of network performance exceptions in a plurality of consecutive second time periodicities after the second time periodicity are less than the first threshold.

23. A network device, wherein the network device comprises a main control board and an interface board, the main control board comprises a first processor, the first processor is configured to execute instructions to perform steps corresponding to the control plane in claims 1 to 11, the interface board comprises a second processor, and the second processor is configured to execute instructions to perform steps corresponding to the forwarding plane in claims 1 to 11.

24. A computer-readable storage medium, wherein the storage medium stores at least one instruction, and the instruction is read by a processor, so that a forwarding plane and a control plane perform the method according to any one of claims 1 to 11.
